# EUROPEAN PATENT APPLICATION

(11) **EP 4 560 258 A1**
(43) Date of publication of application: **28.05.2025**
(21) Application number: 23211189.8
(22) Date of filing: 21.11.2023
(51) Int. Cl.: G01B 11/00, G01B 11/24, G02B 21/08

(54) **POLARISATION SELECTIVE IMAGING**

(71) Applicant: Hexagon Technology Center GmbH, 9435 Heerbrugg (CH)
(72) Inventor: BRÜHLMANN, Danick, 9422 CH-Staad (CH); JENSEN, Thomas, CH-9400 Rorschach (CH); YANG, Zheng, D-88046 Friedrichshafen (DE); PRZYGODDA, Frank, D-88131 Lindau (DE); STIGWALL, Johan, 9008 St. Gallen (CH)
(74) Representative: Kaminski Harmann

(57) **Abstract**

The invention relates to a measuring device for imaging an object (7). The measuring device comprises a light emitting unit (21) configured to emit polarised measuring light, a light receiving unit (30) configured to receive and detect reflected measuring light, and a support structure (10) which comprises a retro-reflective layer (11) and a polarisation state manipulation layer (12). The support structure (10) provides retro-reflecting of the measuring light and changing a polarisation state of the measuring light such that the polarisation state of incident measuring light is different relative to the polarisation state of retro-reflected measuring light. The measuring device (10) comprises a polarisation selecting unit configured to provide selecting either reflected measuring light with a first polarisation state or with a second polarisation state. The selection is provided by selectively providing emitting of the measuring light with a first polarisation state or with a second polarisation state by changing an emitting selection state of the polarisation selecting unit and/or by selectively providing transmitting of reflected measuring light only of the first polarisation state or of the second polarisation state by changing a transmission selection state of the polarisation selecting unit.

## Description

### FIELD OF THE INVENTION

The present invention relates to a measuring machine comprising an optical probe with a polariser, a reflection surface and a controlling unit to control the optical probe and to generate images.

### BACKGROUND OF THE INVENTION

A measuring machine or a coordinate measuring machine (CMM) of the present invention is a machine configured to image an object and/or to measure the 3D coordinates of certain points, in particular the whole surface topography, of a work piece. Surface in the sense of the present invention might mean a 2D exterior of the work piece, but can equally mean a surface region, i.e. region of finite thickness. For brevity and transparency reasons from here on surface will be used as a 2D surface, the specific features of measuring a surface region may be applied accordingly.

CMM's are important in various industries e.g. in production measurement, quality control or reverse engineering. They may be utilized for example to determine deviations of the geometry of a manufactured product from the design model, e.g. to determine whether the deviations are within the manufacturing tolerance. Such measurements are typically carried out automatically or semi-automatically based on a computer generated or operator selected measuring path wherein such measuring path is provided with respect of the design model.

Another application of a CMM which is gaining more prominence is the reverse engineering of an object. For such applications no design model exists, but an operator can command the 3D movement of the probe head by manual steering commands utilizing e.g. a jog box/joystick. Alternatively, the operator may directly steer the handheld sensor.

Typically, a CMM has a main structure, a probing system, a data collection and data processing system.

The main structure usually comprises a set of actuators responsible for positioning the probing system. One widespread example of a CMM is a 3-axis system. DE 43 25 347 discloses such a CMM system. Here the main structure includes a basis with a measuring table and a movable frame. The work pieces might be positioned or mounted on the measuring table. The movable frame is mounted on the basis such that it can be moved along a first axis, the frame comprises an arm mounted such that it can be moved along a second axis perpendicular to the first axis. The probing system comprises the probe head mounted on the arm such that it can be moved along a third axis, which is perpendicular to the first and second axes. Such a construction enables the steering of the probe head in all three dimensions allowing to measure the relevant 3D coordinates of an object. Contemporary 3-axis systems often further comprise components, e.g. stacked rotary tables, to provide 5 degrees of freedom regarding the relative pose of the probe head and work piece.

Another typical embodiment of the CMM is the so-called articulated arm coordinate measuring machine (AACMM). An AACMM comprises a base to be stationed and an arm comprising multiple arm segments connected by articulations. The articulations provide movability to a movable end of the arm which is opposed to the base and wherein a probe head can be attached. The probe head is typically manually guided by an operator. Due to its design principles such a system is less accurate than the above mentioned 3- or 5-axis system, on the other hand it offers higher flexibility. E.g. EP 2 916 099 B1 discloses such an AACMM instrument.

The probing system of the CMM might be based on contact or non-contact techniques. In the first case a mechanical probe, typically realized as a stylus, achieves direct mechanical contact with the work piece and the probe is guided through a given measuring path, while the endpoint coordinates of the stylus are derived from sensor readings, e.g. encoder readings, regarding the state of the CMM. Non-contact techniques can be based on projecting a primary measuring beam on the work object and registering a secondary beam emanating from the object surface region. One advantage of non-contact techniques is that a damage to the work object is less likely due to the lack of mechanical contact. Furthermore, non-contact methods allow a parallel acquisition of an extended area, unlike to the stylus-based methods where only the coordinates of a single point are registered.

Another typical embodiment of a measuring machine for imaging an object is a so-called vision machine. Such vision machines are known for selective detection of a transmitted or reflected light illumination. A vision machine may be embodied as a telecentric imaging system to image and measure an object on a measuring table. Another type of vision machines provides movement of the optical system relative to a base and, this, enables to image greater areas of an object to be measured. Movement of the optical system can be provided by drive means and encoding means like typical CMMs.

Traditional imaging of an object by providing selection of detecting backlight (transmitted light) or detecting incident light for particular imaging of the object is typically accompanied by huge technical effort, in particular for back light illumination. This is because additional illumination optics (light setup) below the object is required.

EP 0 531 322 B1 proposes a particular arrangement of a reflector behind the object and use of polarised light and specifically arranged polarisation elements for selecting detection of light reflected at the object or light reflected by the reflector. However, this approach still results in a weakened contrast of both image types, i.e. imaging transmitted light or detecting incident light.

### OBJECT OF THE INVENTION

Therefore, the object of the present invention is to provide a measuring machine which provides to reduce the drawbacks of above.

A further objective of the present invention is to provide a measuring machine providing more precise imaging of an object to be measured.

These objectives are achieved by realizing the characterizing features of the independent claims. Features, which further develop the invention in an alternative or advantageous manner are described in the dependent patent claims.

### SUMMARY OF THE INVENTION

Top-light illumination is often appropriate for imaging object surfaces. Here, a perpendicular surface orientation can be preferred so that the surface normal vector is parallel to the optical axis of the lens. To match illumination and imaging angles over the whole field of view, both the lens and the illumination are typically (nearly) telecentric, i.e. with all chief-rays parallel to the optical axis.

Close to the pupil plane of the telecentric lens the top light can be in-coupled co-axial to the optical axis with a beam splitter (cube or plate) in the optical path. The emitted top light can have the same angular illumination spectrum as the NA of the lens. After reflection at a (perpendicular shiny) surface the received light thus can perfectly match and completely fill the entrance pupil of the lens resulting in a sharp and high-contrast image of object structures that allow high-accuracy measurements.

Top light can also be used to illuminate diffuse surfaces and can be useful to reduce shadowing when illuminating into deep holes or similar structures.

In contrast thin objects like sheet metal parts or PCBs are typical candidates for bottom light illumination to determine e.g., bore hole positions and diameters. For best illumination conditions the angular spectrum (NA) of the light can match the NA of the lens so that the entrance pupil of the telecentric lens is filled.

Vision machines (vision CMMs) of the state of the art can have an illumination table consisting of a glass plate with a hollow space beneath in which a light setup is moved mechanically, e.g. by individually motorizing the lighting module or hanging the illumination head from the bridge of the CMM. For larger dimensions above 1 m² the glass plate will get quite heavy (several 100 kg at 10 mm thickness) and will be affected by bending due to its weight. So, this approach limits the size of vision-based CMMs and is not scalable to be used in larger machines used for tactile and non-contact 3D metrology.

The present invention is based on the idea of providing a retro-reflecting element behind an object to be imaged or to be measured. Hence, by illumination the object from above light is reflected at the upper surface of the object but also by retro-reflecting from behind the object. By that, top light from above can be converted into bottom light from below the object in areas in which the object shows open edges (like bore holes, etc.). A combination of top light imaging and bottom light imaging becomes available by use of only one light source and with also avoiding provision of a complex bottom light equipment.

Moreover, polarised light and additional polarising elements are used to provide selection of detecting measuring light reflected at the object or reflected behind the object.

The present invention relates to a measuring device for imaging an object. The measuring device comprises a light emitting unit configured to emit, in particular linearly, polarised measuring light, a light receiving unit configured to receive and detect reflected measuring light, and a support structure comprising a retro-reflective layer and a polarisation state manipulation layer.

The support structure provides retro-reflecting of the measuring light and changing a polarisation state of the measuring light such that the polarisation state of incident measuring light is different relative to the polarisation state of retro-reflected measuring light. The support structure can in particular also provide supporting of the object.

The measuring device comprises a polarisation selecting unit configured to provide selecting either reflected measuring light with a first polarisation state or and/or reflected measuring light with a second polarisation state for receiving the reflected measuring light by means of the light receiving unit.

The reflected measuring light can be provided by reflection of the measuring light at the object and/or by retro-reflection of the measuring light by the support structure. In other words, reflected measuring light can be understood as measuring light which is either reflected by the object or by the retro-reflective layer or a combination of both (compared to emitted measuring light which is directed towards the object).

In one embodiment, the polarisation selecting unit can be part of the light receiving unit, in particular of a camera.

In one embodiment, the light emitting unit can be configured to emit measuring light of the first polarisation state and/or measuring light of the second polarisation state, wherein the measuring light of the first polarisation state and the measuring light of the second polarisation state are providable simultaneously or successively.

In one embodiment, the light emitting unit can comprise at least two light sources, e.g. laser diodes, one of which is configured to emit measuring light of the first polarisation state and the other one is configured to emit measuring light of the second polarisation state. The polarisation selecting unit can be represented by a switchable light emitting unit. In one embodiment, the polarisation selecting unit can be configured to control the light emitting unit such that either measuring light of the first polarisation state or measuring light of the second polarisation state is emitted. In particular, the polarisation selecting unit is represented by a controller, i.e. the polarisation selecting unit can control the emission of light.

In one embodiment, the light emitting unit, the support structure and the light receiving unit define a beam path for the measuring light.

According to one embodiment, the polarisation selecting unit can be arranged along the beam path between the light emitting unit and the support structure.

According to one embodiment, the polarisation selecting unit can be arranged along the beam path between the support structure and the light receiving unit.

In one embodiment, the measuring device can comprise a first polariser arranged along the beam path between the light emitting unit and the support structure and/or a second polariser arranged along the beam path between the support structure and the light receiving unit.

A polariser can provide to filter light of particular polarisation states and to transmit measuring light of only one particular polarisation state.

In one embodiment, the polarisation selecting unit can be provided as a polarising beam splitter providing separation of reflected measuring light with a first polarisation state and of reflected measuring light with a second polarisation state and the light receiving unit can comprise two sensor units, one of which configured and arranged to detect measuring light of the first polarisation state and one of which configured and arranged to detect measuring light of the second polarisation state.

In one embodiment, the polarisation selecting unit can be configured to provide selecting either reflected measuring light with a first polarisation state or with a second polarisation state. Selecting of the reflected measuring light may be understood to choose a portion of measuring light which is allowed being transmitted to the light receiving unit.

The selecting of the reflected measuring light can be provided by either selectively providing emitting of the measuring light with a first polarisation state or providing emitting of the measuring light with a second polarisation state by changing an emitting selection state of the polarisation selecting unit. Alternatively or additionally, the selecting of the reflected measuring light can be provided by selectively providing transmitting of reflected measuring light only of the first polarisation state or of the second polarisation state by changing a transmission selection state of the polarisation selecting unit.

Hence, the polarisation selecting unit can provide to select a particular kind or portion of measuring light to be emitted by the light emitting unit. Alternatively, or additionally, the polarisation selecting unit can provide to select propagation of a particular portion of reflected measuring light to a sensor of the light receiving unit.

In one embodiment, the polarisation selecting unit can be provided as a controller to control the light emitting unit. As for example, here the polarisation selecting unit can be configured to control the light emitting unit, in particular a switchable polarising filter or two light sources of the light emitting unit. The switchable polarising filter can be provided by a mechanically rotatable linear polariser.

In particular, the polarisation selecting unit can comprise a fixed polariser followed by a switchable polarisation rotation device such as an LCD acting either as a rotator (twisted nematic) or half-wave plate.

In one embodiment, the polarisation selecting unit can be provided by the light emitting unit. The invention also relates to such an embodiment wherein a selection of emitted measuring light can be provided by the light emitting unit. Such functionality may be provided by an arrangement of at least two different light sources (e.g. laser diodes) and providing switching of light emission between the light sources.

The light emitting unit can also be configured or controlled to provide emission of measuring light of at least two different polarising states simultaneously.

In one embodiment, the polarisation selecting unit can comprise a moveable polarising filter element (e.g. polariser) for filtering emitted measuring light or reflected measuring light, in particular arranged rotatable about the optical axis (corresponding to the propagation direction of the measuring light). As for example, to select a particular portion of reflected measuring light the polarising filter element can be arranged with an actuator (motor) to provide a rotation of the filter element.

In one embodiment, the polarisation selecting unit can be provided as a switchable optical element, in particular as a liquid crystal device (LCD). An LCD, in particular a twisted nematic LCD, can provide to change the polarisation state of transmitted light by 90°. If combined with a conventional polariser (polariser behind the LCD), the LCD can be used to select one particular portion of measuring light (e.g. in case the measuring light propagating to the LCD comprises two different polarising portions) to correspond with the polarisation conditions of the polariser and successively be transmitted through the polariser.

In one embodiment, the polarisation selecting unit can be provided as a polariser (e.g. polarising matrix) which is combined with a sensor unit of the light receiving unit and provides pixel-selective detection of reflected measuring light of the first and the second polarisation state. In particular, the polarisation selecting unit can be provided by a polarisation sensitive sensor. By that, each pixel or group of pixels of the sensor can be illuminated with measuring light of a particular polarisation state. By reading out and/or processing only pixels which are illuminated with measuring light of a desired or favoured polarisation a respective image can be generated, e.g. covering only light which is reflected by the object or by the support structure.

In particular, by using a polariser combined with a sensor unit, the polarisation selecting unit can be implemented on algorithm level. When using at least three (normally four) polarisation filters with different polarisation directions, one can calculate the polarisation direction and distinguish between two and even more polarization states.

The polarisation selecting unit can provide to either emit or transmit light of a particular polarisation state.

In one embodiment, the measuring light of the first polarisation state can comprise linear polarisation of a first orientation and the measuring light of the second polarisation state can comprise linear polarisation of a second orientation orthogonal to the first orientation. In particular, the light emitting unit can comprise polarised filtering of the first orientation and the light receiving unit can comprise polarised filtering of the second orientation orthogonal to the first orientation.

In one embodiment, the polarisation state manipulation layer can provide circular polarisation of measuring light by passing the polarisation state manipulation layer. In particular, the polarisation state manipulation layer can comprise a λ/4 waveplate or λ/4 foil.

In one embodiment, the retro-reflective layer can comprise a retro-reflective tape.

In one embodiment, the measuring device can comprise a controlling and processing unit configured to control at least the polarisation selecting unit and the light receiving unit, the controlling and processing unit can comprise an image capturing functionality. The image capturing functionality can be configured to emit the measuring light by controlling the light emitting unit, to detect reflected measuring light by controlling the polarisation selecting unit to select measuring light with the first polarisation state and correspondingly capture a first image by means of the light receiving unit, and to detect reflected measuring light by controlling the polarisation selecting unit to select measuring light with the second polarisation state and correspondingly capture a second image by means of the light receiving unit.

In particular, e.g. when using a polarisation sensitive sensor, the first and the second image can be captured within a single exposure.

In particular, the first image and the second image each can cover at least a part of the object and of the support structure, wherein each image covers a common region of the object. By that, processing of both images provides measuring of the object, i.e. of the common region of the object.

In one embodiment, the detected reflected measuring light can partly be reflected at the object and partly be reflected by the support structure, wherein the measuring light reflected at the object comprises a polarisation state different from a polarisation state of measuring light reflected by the support structure.

Hence, the controlling and processing unit, in particular the image capturing functionality, can provide to capture two different images. Each of the images comprises image information related to a particular portion of the measuring light, e.g. to a particular polarisation of the measuring light. By that, one image can comprise image information related to the measuring light which is reflected at the object and the other image can comprise image information related to the measuring light which is reflected by the support structure. In particular, a top-light image and a bottom light image can be captured.

In one embodiment, the controlling and processing unit can comprise an image processing functionality configured to subtract image information of the first image from image information of the second image.

As explained in more detail below, subtraction of image information can provide to improve the contrast in the resulting image. The contrast can be reduced because the polarisation manipulation layer may not work properly. Thus, the received measuring light reflected at the support structure (bottom-light image) will be less bright. Further, the retroreflected light (reflected by the support structure) may not totally be eliminated because the polarization state may not be accurate due to possible depolarisation effects of the reflection foil. Therefore, the contrast object surface to background light results to be too low for many applications.

Hence, by subtracting the two images the contrast can be further improved and more precise measurement of e.g. edged and dimensions will become available by that.

The subtraction of image information can preferably be performed by applying a weight factor for the subtraction. To provide maximization of the contrast (making the light from the unwanted measuring mode as dark as possible in the image), for example, an image which comprises 20% of the unwanted intensity as compared to another image, can be considered by a weight factor of 0.2 to cancel that component.

In one embodiment, the image information can comprise pixel-related values concerning colour and/or brightness of the pixel.

In one embodiment, the image information can comprise image region-related information, in particular contrast.

In one embodiment, the measuring device can de embodied as a coordinate measuring machine, in particular as a vision machine. A vision machine should be understood to be a type of CMM, i.e. a specific CMM. Alternatively, the measuring device can be provided by a telecentric imaging system, a microscope or the like.

Therefore, the present invention also relates to a CMM as measuring device for measuring several measuring points on a surface of an object. The coordinate measuring machine can comprise a base, a probe head with an optical probe and a machine structure, in particular a portal- (bridge-) or SCARA-type machine structure, with structural components for linking the probe head to the base. The CMM can also be embodied as a horizontal arm CMM or moving-table bridge CMM (e.g. Optiv and PMM-C, and gantry CMMs). A Scara-type machine is a type of industrial robot. The acronym SCARA stands for Selective Compliance Assembly Robot Arm or Selective Compliance Articulated Robot Arm.

The base may be provided as a measuring table, e.g. made from granite, or as a physical reference point, e.g. a pedestal or set-up position of the CMM. The support structure can preferably be arranged at the base.

The probe head can be provided as an element for carrying a measuring probe, e.g. a tactile or an optical probe, or a tool. The probe head can further be embodied to provide rotation of the measuring probe about one, two, or three axes. In case the CMM is built as a portal (3-axes) CMM the probe head is preferably mounted to a z-ram which provides movability of the probe head in z-direction.

The optical probe can preferably be arranged at the probe head in order to provide measurement with the optical probe of a distance to an object or structure (1D data), a lateral dimension of an object or structure (2D data), or both at the same time (3D data). By that, the optical probe can be moved relative to the base. The optical probe may be embodied as a camera system.

The optical probe can comprise an optical system comprising a light emitting unit and light receiving unit and e.g. a telecentric lens.

An illumination of the object might be a coaxial top light coupled into the telecentric lens by a beam splitter or beam combiner. Typically, the optical probe has a lateral object resolution of a few microns.

Hence, as mentioned, the optical elements like light emitting unit and light receiving unit can preferably be arranged with the optical measuring probe.

As indicated above, the machine structure may comprise particular elements which are movable relative to each other to provide positioning the probe head within a measuring volume of the CMM. Relative movability should be understood as relative linear or relative rotational movement, but however should not be limited to a particular design of a CMM but should also cover CMMs and robots known from prior art.

The coordinate measuring machine also comprises at least one drive mechanism for providing movability of the machine structure and of the probe head relative to the base. The drive mechanism can be provided as a motor, step-motor, actuator etc. In particular, the coordinate measuring machine can comprise at least three driving means which are arranged so that the probe head can be moved in three directions, e.g. in the directions of a x-axis, a y-axis and a z-axis.

The coordinate measuring machine also comprises at least one encoding unit which is configured to provide positional data concerning a position of the machine structure and/or of the probe head relative to the base. In particular, the coordinate measuring machine comprises a set of encoders which provide relative positions of machine components in particular coordinate axes. The at least one encoding unit may be provided by a linear encoder, a rotational encoder or a sensor unit capable to measure distances between two points.

The invention also relates to a method for imaging an object by means of a measuring device as described above. The method comprises providing the object on the support structure, illuminating the object by directing measuring light to the object by means of the light emitting unit, receiving and detecting measuring light reflected at the support structure and reflected by the object by means of the light receiving unit, and capturing a first image and a second image of the object by means of the light receiving unit.

In particular, the first and the second image can be captured within one single exposure, e.g. by using a polarisation sensitive sensor.

According to the method, receiving and detecting of the measuring light is provided by selecting measuring light with a first polarisation state and capturing the first image by capturing reflected measuring during selecting measuring light with the first polarisation state. In addition, measuring light with a second polarisation state is selected and the second image is captured by capturing reflected measuring during selecting measuring light with the second polarisation state.

The invention also relates to a computer program product, which, when executed by a controlling and processing unit and/or by a controller, causes the automatic execution and controlling of the steps of the method of above.

### BRIEF DESCRIPTION OF THE DRAWINGS

By way of example only, specific embodiments of the invention will be described more fully hereinafter with reference to the accompanying figures, wherein:
Figure 1 shows the schematics of an embodiment of a measuring machine as a three-axis machine according to the invention.
Figure 2 shows an embodiment of an optical system and a support structure of a measuring machine according to the invention.
Figure 3 shows an embodiment of an optical system and a support structure of a measuring machine according to the invention.
Figures 4a-4b depict the advantageous effect of providing a retro-reflective layer compared to common (specular) reflection.
Figures 5a-5b show a further embodiment of an optical system and a support structure of a measuring machine according to the invention.
Figure 6 shows a further embodiment of an optical system and a support structure of a measuring machine according to the invention.

### SPECIFIC EMBODIMENTS OF THE INVENTION

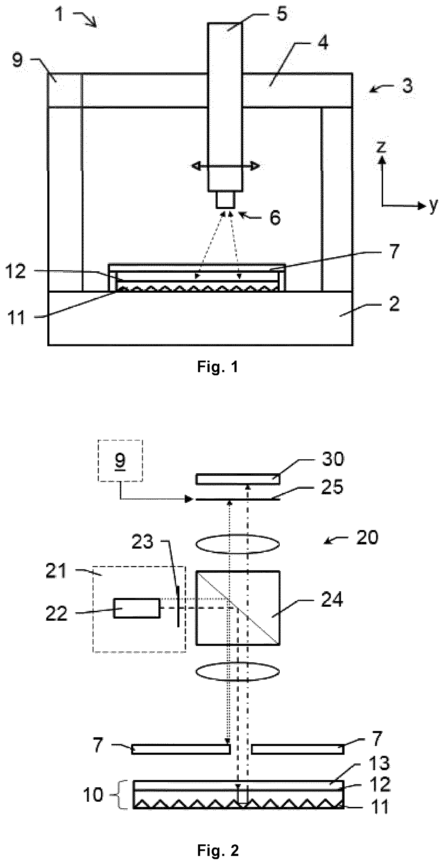

Figure 1 shows a schematic depiction of an embodiment of a measuring machine 1, in particular a vision machine or a CMM, according to the invention as a three axes machine. The measuring machine 1 comprises a measuring table 2 to support the object 7 to be measured. The measuring table 2 provides the base of the machine. While not shown in the depicted embodiment, the measuring table 2 might comprise elements aiding the positioning of the work piece 7. The measuring table 2 might also comprise further elements to clamp or otherwise fix, in particular by a vacuum chuck, the work piece 7. Such further elements might be temporarily mounted to the measuring table 2.

The measuring machine 1 comprises a machine structure 3 embodied as movable frame mounted on the measuring table 2 such that it can be moved along a first axis (x-axis) by a first set of motors. The machine structure 3 comprise an element which spans the measuring table 2, a so-called bridge 4. Further, the CMM comprises a carrier which is mounted moveable along the bridge 4. The mounting of the carrier is provided such that it can be moved along a second axis (y-axis) perpendicular to the first axis.

The carrier carries a further element 5 which is arranged and configured to be moved along a third axis (z-axis). Such element 5 may further be called (z-)ram or rod.

Furthermore, the measuring machine 1 comprises a drive mechanism for providing movability of the machine structure 3 and of the probe head 6 relative to the base 2. The drive mechanism can comprise particular drive units of providing relative movement of the particular components of the machine structure 3, e.g. a motor which provides movement of the whole machine structure 3 (bridge 4) relative to the base 2, a motor which provides movement of the carrier relative to the bridge 4 and a motor which provides movement of the z-ram 5 relative to the carrier.

The measuring machine 1 also comprises at least one encoding unit configured to provide positional data concerning a position of the machine structure 3 and/or of the probe head 6 relative to the base 2. The encoding unit may comprise several encoders which provide information about positions of the bridge 4 relative to the base 2, of the carrier relative to the bridge 4 and of the z-ram 5 relative to the carrier.

An optical probe 6 is mounted on the end of the z-ram 5. The optical probe 6 can be part of an exchangeable probe head. The optical probe 6 is configured to acquire data which is related to the surface of the work piece 7. Hence, the optical probe 6 comprises a light receiving unit (sensor) to receive and detect an optical signal, e.g. light or measuring light reflected at the surface of the work piece 7.

In one embodiment, the measuring machine 1 can comprise additional joints and/or actuators to provide additional degrees of freedom of moving the optical probe head 6. For instance, there may be arranged a rotational joint to provide rotation of the probe head and/or of the optical probe 6.

The optical probe 6 comprises a light emitting unit for illuminating the work piece with polarised light 7 and/or for projecting polarised measuring light towards the work piece 7. The light receiving unit is configured to detect a reflection of the light emitted by the light emitting unit.

The measuring machine 1 further comprises a retro-reflective layer 11 and a polarisation state manipulation layer 12. The combination of these layers provides both retro reflecting of measuring light which is emitted by the light emitting unit and switching the polarisation state of the measuring light when passing the polarisation state manipulation layer 12.

The polarisation state manipulation layer 12 is preferably designed to change a linear polarisation direction of light passing the polarisation state manipulation layer 12 two times by in total 90°, i.e. changing an orientation of the electric field vector relative to an axis of light propagating about that axis by 90°. In other words, measuring light with parallel polarisation results to reflected measuring light with vertical (orthogonal) polarisation.

The polarisation state manipulation layer 12 can comprise or consist of a quarter waveplate foil (also known as retarder foil). Light passing the waveplate foil becomes circularly polarised after the first pass, and after reflection and a second pass through the waveplate foil it becomes perpendicularly polarised compared to the incident polarisation state of the top light.

The retro-reflective layer 11 can comprise or consist of a retro-reflective tape.

By means of such support structure which comprises the retro-reflective layer and the polarisation state manipulation layer improved selective detection of light reflected on top of the object 7 and of light reflected by the support structure is enabled. A corresponding configuration of the optical probe provides such selection of reflective light. The configuration of the system is described herein, e.g. relating to the following figures.

In particular, the retro-reflective layer 11 can also affect the polarisation state of the measuring light. Here, the polarisation state manipulation layer 12 can be adjusted so that the combined effect of both layers 11, 12 affects the polarisation so that it is orthogonal to the polarisation of an impinging light.

The measuring machine 1 also comprises a controlling and processing unit 9. The controlling and processing unit is configured to control the drives of the machine 1 to provide precise positioning of the optical probe 6 relative to the object 7. The controlling and processing unit is further configured to control data acquisition by means of the optical probe 6. In particular, the controlling and processing unit 9 can be configured to control a polarisation selecting unit to provide data acquisition both of light reflected at the object and light reflected by the support structure.

An approach according to the invention of how to control the polarisation selecting unit is described below in more detail.

Figure 2 shows an optical system 20 and a support structure 10 of a measuring machine 1 according to the invention. The optical elements of the optical system 20 to provide measuring light and to detect reflected measuring light can be provided by an optical probe 6 of the measuring machine.

The support structure 10 comprises a retro-reflective layer 11 and a polarisation state manipulation layer 12. The combination of these components provides retro-reflection of incident light and perpendicularly polarisation (e.g. second polarisation state) of the reflected light compared to the incident polarisation state of the incident light (e.g. first polarisation state).

The support structure 10 also comprises a sandwich glass plate 13 for protecting the layers below. However, such glass plate 13 is an optional feature.

The retro-reflective property of the retro-reflective layer 11 (e.g. a tape) provides to convert top light from above into bottom light from below the object 7 in areas in which the object shows open edges (like bore holes, etc.) as shown in the figure. The bottom light setup can comprise a quarter waveplate foil (also known as retarder foil) followed by the retro-reflective tape. Light passing the waveplate foil becomes circularly polarised after the first pass, and after reflection and a second pass through the waveplate foil it becomes perpendicularly polarised compared to the incident polarisation state of the top light.

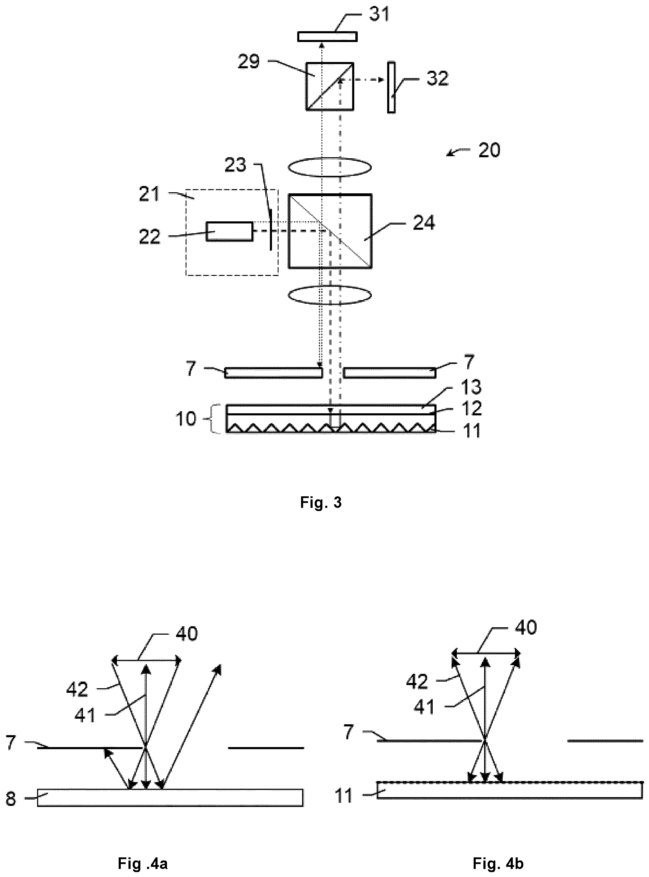

A main advantage compared to e.g. a flat mirror placed below the object is the reversal of the light direction allowing a much sharper imaging of edges, which is one of the main applications of bottom light illumination. The advantageous effect of retro-reflection compared to common reflection by a mirror is described with figure 3a and 3b.

The measuring machine 1, in particular the optical system 20, further comprises a light emitting unit 21. In the present embodiment, the light emitting unit 21 comprises a light source 22 and a first polariser 23. Hence, the light emitting unit 21 is configured to emit polarised light of a particular first polarisation state.

The introduction of such polarisation techniques allows the differentiation between light reflected from the top surface from retro-reflected bottom light. The light emitting unit 21 can be provided as a laser diode (which intrinsically produces polarised emission) or as an alternative light source combined with a polarisation filter (as shown), e.g. polarisation filtered LED light. This polarised light can be coupled into the telecentric lens like in a traditional coaxial top light.

A beam splitter 24 is arranged for incoupling the top light emitted by the light emitting unit 21.

A second polariser 25 is arranged between the beam splitter 24 and the light receiving unit 30. The light receiving unit 30 can comprise an image sensor. The polariser 25 is configured to select a desired polarisation state, i.e. provides transmission of light of a particular polarisation state.

In case the transmission state of the polariser 25 is aligned to the bottom light this becomes bright compared to the dark regions of the surface of the object 7. By a 90° rotation of the second polariser 25 the condition is inverted: The surface of the object 7 appears bright and the bottom light is blocked.

The second polariser 25 provides a polarisation selecting unit, wherein it comprises a moveable polarising filter element for filtering emitted measuring light or reflected measuring light. The polarising filter element is arranged to be rotatable about the optical axis (e.g. axis of propagation of reflected measuring light).

The second polariser 25 provides selecting either reflected measuring light with a first polarisation state or with a second polarisation state by respective rotation. By that, the second polariser 25 selectively provides transmitting of reflected measuring light only of the first polarisation state or of the second polarisation state by changing a transmission selection state of the polarisation selecting, here by rotation of the polarising filter.

The polarisation state of the emitted measuring light is typically not changed because of reflection at the object 7. Hence, by setting the polariser 25 parallel to the illumination polarisation state, the surface of the object 7 is visible and light that propagated through the polarisation state manipulation layer 12 is attenuated.

In contrast, the polarisation state of the emitted measuring light is changed by 90° in case of double interaction with the polarisation state manipulation layer 12 and respectively reflected measuring light comprises a different polarisation state. Hence, a 90° rotation of the polariser 25 suppresses light from the surface and makes light from the bottom-light retro-reflective tape visible after transmission through the polarisation state manipulation layer 12 (as shown in figure 2). By that, a typical bottom light appearance of the object 7 can be provided, i.e. with very high contrast between the workpiece and the background.

Therefore, an operator of the measuring machine can change between top light or bottom light appearance of the object 7 by a rotation of the second polariser 25 or by rotation of the first polariser 23. When rotating the first polariser 23, the polarisation selecting unit can be provided by the first polariser 23.

The measuring machine further comprises a controlling and processing unit 9. The controlling and processing unit 9 is configured to control the polarisation selecting unit, i.e. here the second polariser 25. The controlling and processing unit can further be configured to control the light emitting unit 21 and/or the light receiving unit 30.

The controlling and processing unit 9 comprises an image capturing functionality which is configured to emit the measuring light by controlling the light emitting unit 21, to detect reflected measuring light by controlling the polarisation selecting unit 25 to select measuring light with the first polarisation state and correspondingly capture a first image by means of the light receiving unit 30, and to detect reflected measuring light by controlling the polarisation selecting unit 25 to select measuring light with the second polarisation state and correspondingly capture a second image by means of the light receiving unit 30.

Due to typical depolarisation effects on side of the polarisation state manipulation layer 12 and/or the retro-reflective layer 11 the contrast of the images may be reduced. As for example this is because the waveplate foil will not work properly. In particular, the contrast can also be reduced due to depolarisation by e.g. volume scattering in the material.

A possible depolarisation of the polarisation state manipulation layer 12 (e.g. waveplate foil or film) and/or the retro-reflective layer 11 can be caused due to manufacturing-related deviations in the microgeometry of the e.g. retro-reflective structure (e.g. caused due to stamping conditions). This is a so-called dihedral error, i.e. the reflecting surfaces are not perfectly orthogonal to each other, which can lead to a slight divergence and also to a slight rotation of the polarisation of the retro-reflecting light.

In addition, diffraction effects at the edges of the microstructures are also likely to lead to smearing and incorrectly aligned polarisation of the backpropagating light.

For example, in bottom light application the background light will be less bright. However, light from the object surface can nearly completely be terminated. In particular, this is true for technical (metal) materials. In comparison the backlight is sufficiently bright with a great amplitude. A contrast of about 90% can still be reached.

However, the situation is different for the top-light measurement. Due to the polarisation state being typically not accurate due to depolarisation of the polarisation state manipulation layer 12, e.g. of a reflection foil, the background light cannot be eliminated at the polariser 25. Hence, there remains a comparatively great amplitude, in particular greater than for the surface of the object 7. Therefore, the contrast between reflected light from surface of the object 7 and background light can result to be about 30%, which is too low for many measuring or imaging applications.

The above problem can be overcome by capturing at least two images of the object as described above. Further, the controlling and processing unit comprises an image processing functionality configured to subtract image information of the first image from image information of the second image. In particular, the image information of the bottom-light image is subtracted from the top-light image.

By taking such a difference image the background light can be eliminated and a contrast of about 100% can be provided.

In particular, the subtraction may not be a simple difference operation but rather a weighted average or linear combination of two raw images. The back-light component in the top-light image can be eliminated by that.

In particular, an automatic field-calibration for a workpiece to be measured can be performed by automatically classifying pixels as retroreflective or non- retroreflective by comparing with a known polarisation state for retroreflected light. Based on this, the weights can be optimised to maximise contrast.

For a respective integration in a measuring machine the image subtraction has to be performed comparatively fast and automized, so that a movement of the optical probe for e.g. a continuous scan of the object surface has not to be slowed down or disturbed. For this, a fast polarisation switch by use of an electrically switchable LCD and taking two images sequentially followed by an image subtraction in software can alternatively be provided (as shown in figures 4a and 4b).

Alternatively, the image sensor can be configured to allow taking two exposures of different polarisation states directly after each other without an image readout inbetween (quasi-simultaneously).

Alternatively, the image sensor can be configured to allow to capture polarisation sensitive images and the subtraction of two orthogonal images taken simultaneously at one exposure.

Figure 3 shows an optical system 20 and a support structure 10 of a measuring machine 1 according to the invention. The optical elements of the optical system 20 to provide measuring light and to detect reflected measuring light can be provided by an optical probe 6 of the measuring machine.

The embodiment differentiates from the embodiment of figure 2 by having a polarising beam splitter 29 arranged between the support structure 10 and the light receiving unit. The light receiving unit comprises two sensor units 31 and 32. The beam splitter 29 and the sensor units 31, 32 are arranged relative to each other so that each sensor provides detection of measuring light of a particular polarisation state. Hence, the sensors 31,32 are arranged with respect to the beam splitter 29 in a way that each image sensor 31,32 detects only one orthogonal polarization state of the light.

An advantage of this setup is that different images with different polarisation states can be captured at the same time, wherein optical losses are avoided.

Figures 4a and 4b show the advantageous effect of providing a retro-reflective layer 11 compared to common reflection by e.g. a mirror 8 or the like.

An advantage of a retro-reflective layer 11 compared to a flat mirror 8 placed below the object 7 is the reversal of the light direction allowing a much sharper imaging of edges. For an advantageous (sharp) imaging of an edge, it is important that as much marginal rays as possible propagate back to an entrance pupil 40 (e.g. defined by the numerical aperture (NA) of a telecentric lens) and in this way contribute to the image forming process. Furthermore, the orientation of the retro-reflective layer is less sensitive to misalignment whereas a mirror would have to be aligned exactly perpendicular to the direction of the emitted light.

Figure 4a is related to a conventional mirror plate 8 placed below an object 7 of interest with a bore hole edge to be measured. The marginal rays 42 are reflected by the mirror, propagate away and do not enter the entrance pupil 40 in back propagation. In this illustration, only the chief ray 41 propagates back into the lens (provided the mirror is well aligned to the optical axis of the telecentric lens). Of course, some portion of rays on one side between the chief ray 47 and the shows outer marginal rays 42 are reflected so that they can be captured, but there will be a significant intensity drop close to the edge and the lens entrance aperture will not be filled symmetrically. This reduction of angular illumination spectrum gets even stronger for larger distances between object 7 and mirror 8. Thus, the image of the edge will get (more) blurry and the location of the edge cannot well be determined resulting in a reduced measurement accuracy.

In case the mirror 8 is replaced by a retro-reflective layer 11, e.g. with a fine micro-structure, the directions of the marginal rays 42 are preserved, and they can propagate back after reflection at the layer 11 entering the entrance pupil 40, as can be seen with figure 4b. Therefore, in this case the image of the edge will become sharp with a higher contrast and the entrance pupil 40 is filled, allowing a precise determination of the edge location. This can become very important in metrology application to determine e.g., a bore hole diameter.

Preferably, the retro-reflective layer 11 is arranged with a defined distance to the object 7 so that a micro-structure of the retro-reflective layer 11 is out of focus for the imaging optics and the reflected light becomes homogeneous. By that, the fine micro-structure of the retro-reflective 11 itself is not disturbing the imaging of object edges.

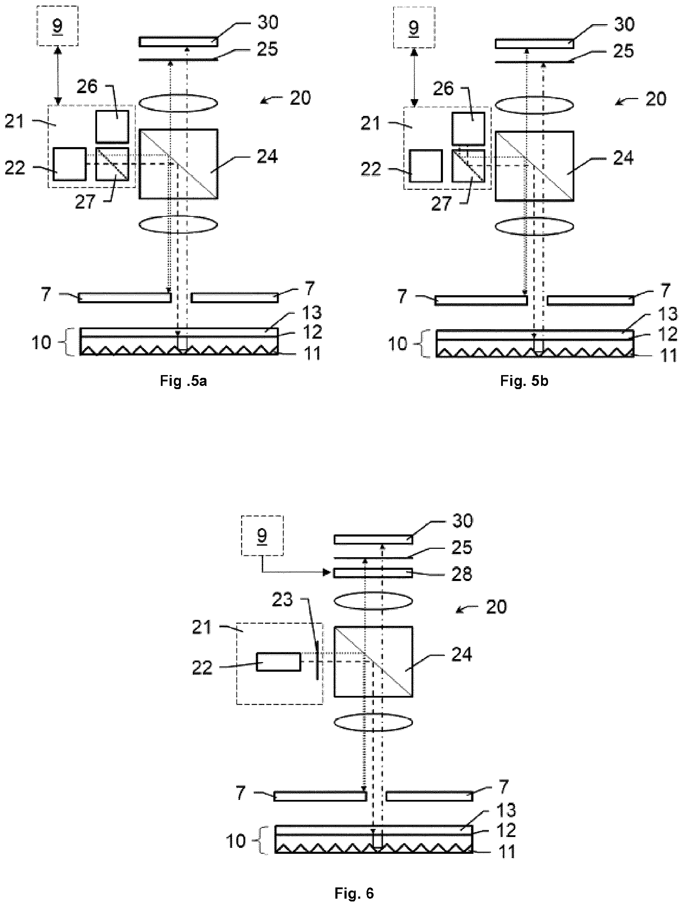

Figures 5a and 5b show an optical system 20 and a support structure 10 of a measuring machine 1 according to the invention. The optical elements of the optical system 20 to provide measuring light and to detect reflected measuring light can be provided by an optical probe of the measuring machine.

The support structure 10 comprises a retro-reflective layer 11 and a polarisation state manipulation layer 12. The support structure 10 also comprises a sandwich glass plate 13 for protecting the layers below. However, such glass plate 13 is an optional feature.

As described in context of figure 2 above, the retro-reflective property of the retro-reflective layer 11 provides to convert top light from above into bottom light from below the object 7 in areas in which the object 7 shows open edges. The support structure 10 can comprise a retarder foil 12 followed by the retro-reflective tape or foil 11. Light passing the waveplate foil becomes circularly polarised after the first pass, and after reflection and a second pass through the waveplate foil it becomes perpendicularly polarised compared to the polarisation state of the incident measuring light.

The measuring machine 1, in particular the optical system 20, further comprises a light emitting unit 21. In the present embodiment, the light emitting unit 21 comprises two light sources 22 and 26 and a polarising beam splitter 27 (PBS). The light sources 22 and 26 are configured to emit light so that light of the light source 22 provides polarised light of orthogonal polarisation compared to light emitted by the light source 26. Hence, by means of the polarising beam splitter 27, two orthogonally polarised light sources can be combined.

The introduction of such polarisation techniques allows the differentiation between light reflected from the top surface of the object 7 and from light retro-reflected by the support structure 10. The light sources 22 and 26 can be provided as laser diodes (which intrinsically can produce polarised emissions) or as alterative light sources combined with a polarisation filter, e.g. polarisation filtered LED light. This polarised light can be coupled into the telecentric lens like in a traditional coaxial top light.

A further beam splitter 24 is arranged for coupling the top light emitted by the light emitting unit 21 in the imaging optics.

A polariser 25 is arranged between the beam splitter 24 and the light receiving unit 30. The light receiving unit 30 can comprise an image sensor. The polariser 25 is configured to select a desired polarisation state, i.e. provides transmission of light of a particular polarisation state.

In this embodiment, the transmission state of the polariser 25 is chosen to correspond to one polarisation state provide by one of the light sources 22 or 26.

As shown, the transmission state of the polariser 25 here corresponds to the polarisation direction of the measuring light emitted by light source 26.

Figure 5a shows illumination by the light source 22. Measuring light which is reflected at the surface of the object 7 and arrived as reflected measuring light provides the same polarisation state as emitted. Since the polariser 25 only allows transmission of the measuring light of source 26, i.e. of measuring light being orthogonally polarised compared to light source 22, the measuring light reflected at the surface of the object 7 is blocked.

However, the portion of the measuring light which passes a part of the object 7 (e.g. via a borehole) and the polarisation state manipulation layer 12 (two times) and which is retro-reflected by layer 11 arrives the polariser 25 with orthogonally changed polarisation state and passes the polariser 25. Hence, the retro-reflected portion of the measuring light can be received and detected by the light receiving unit 30.

As a result, bottom light becomes bright compared to the dark regions of the surface of the object 7. By that, a bottom light image can be captured.

Figure 5b shows illumination by the light source 26, i.e. with measuring light of a polarisation state rotated by 90°. Here, a portion of the measuring light which is reflected at the surface of the object 7 is transmitted through the polariser 25 and can be captured by the light receiving unit. Another portion of the measuring light which is retro-reflected by the retro-reflection layer 11 (and thus comprises changed polarisation state due to interaction with the polarisation state manipulation layer 12) is blocked by the polariser 25.

As a result, top light becomes bright compared to the dark regions of the surface of the object 7. By that, a top light image can be captured.

This embodiment provides an electronic switching of the light sources 22 and 26 and, by that, allows a selection of top light or bottom light appearance.

The system also comprises a controlling and processing unit 9 which is configured to control the switching of the light sources 22 and 26. Hence, the controlling and processing unit 9 can provide to selectively generate a bottom image or a top image.

Here, the light emitting unit 21 can provide a polarisation selecting unit configured to provide selecting either measuring light with a first polarisation state or with a second polarisation state. Emitting of the measuring light with a first polarisation state or with a second polarisation state can selectively be provided by changing an emitting selection state of the polarisation selecting unit, e.g. activating either light source 22 or light source 26.

Alternatively, for providing different polarisation states a rotatable polariser or a switchable LCD can be combined with the light emitting unit to provide changing of the polarising state of the emitted measuring light (not shown). Alternatively, the polarisation selecting unit can be provided by the controlling and processing unit 9 which is configured to control the light emitting unit 21, e.g. by an implemented image capturing functionality.

In one embodiment, the controlling and processing unit can further be configured to provide image subtraction in order to improve the contrast of, in particular, a top light image as described above. This can provide to compensate possible depolarising effects of the support structure.

Figure 6 shows a further embodiment of a system according to the invention. The embodiment mainly corresponds to the embodiment of figure 2, however, the polariser 25 is arranged to be fixed and a further switchable optical element 28 is arranged along the beam path between the object 7 and the light receiving unit 30. The controlling and processing unit is further configured to control the switchable optical element 28.

The switchable optical element 28 is provided by a liquid crystal device 28 (LCD) in front of the second polariser 25, i.e. between the beam splitter 24 and the polariser 25. The LCD 28 provides an electronically controlled switching between top light and bottom light image without any structural changes, e.g. a mechanical drive for rotating the polariser.

The LCD 28 can act like a one-pixel device that can be electronically controlled to rotate the polarisation state of the incident light like a half-waveplate. For instance, a twisted nematic cell can be used to either rotate the polarisation in the relaxed state, or not rotate by applying a voltage. However, it is to be understood that other types of LCD-modes are also possible.

By that, a transmission of either reflected measuring light which is reflected by the surface of the object 7 or transmission of reflected measuring light which is retroreflected by the support structure 10 can be selected by switching the activation state of the LCD. A comparatively fast switching between top-light detection and bottom-light detection can be provided. Hence, by use of such an LCD 28 fast measuring or scanning of an object 7 can be provided.

Consequently, the switchable optical element 28 (e.g. LCD) provides a polarisation selecting unit according to the invention.

As an alternative (instead of a switchable LCD), an image sensor with a polarisation matrix in front of each pixel can be provided. The polarisation matrix may be configured similar to an RGB filter ("Bayer-pattern") in front of the pixels for colour image sensors. Here, the particular image sensor provides a polarisation selecting unit according to the invention.

By providing a correct orientation to the polarisation both of the emitted light and of the polarising matrix at the sensor, such a sensor allows the detection of the two polarisation states simultaneously with single exposure. A selection of the right pixels allows to separate the two polarisation states and with this a simultaneous measurement of top and bottom light images can be provided.

In particular, such polarisation sensitive sensor can comprise four polarisation filters with different polarisation directions at angle 0°, 90°, 180° and 270°. By using the approach of a 4-phase shifting method, one can calculate the polarisation contrast and direction. Hence, detection of both polarisation states can be provided by numerical evaluation instead of selecting a pixel. By that, the polarisation direction of emitting light is no necessary to be fixed.

In one embodiment the light emitting unit can comprise or be provided by e.g. a laser, a laser diode, an LED or an OLED. In one embodiment the light receiving unit can comprise or be provided by e.g. a CMOS- or a CCD image sensor.

Although the invention is illustrated above, partly with reference to some specific embodiments, it must be understood that numerous modifications and combinations of different features of the embodiments can be made. All these modifications lie within the scope of the appended claims.

## Claims

1. Measuring device for imaging an object (7), the measuring device comprising
• a light emitting unit (21) configured to emit polarised measuring light,
• a light receiving unit (30) configured to receive and detect reflected measuring light, and
• a support structure (10) comprising a retro-reflective layer (11) and a polarisation state manipulation layer (12), wherein the support structure (10) provides
o retro-reflecting of the measuring light and
o changing a polarisation state of the measuring light such that the polarisation state of incident measuring light is different relative to the polarisation state of retro-reflected measuring light,
**characterized in that**
the measuring device comprises a polarisation selecting unit configured to provide reflected measuring light with a first polarisation state and/or reflected measuring light with a second polarisation state for reception with the light receiving unit (30).

2. Measuring device according to claim 1, wherein
the reflected measuring light is provided by reflection of the measuring light at the object (7) and/or by retro-reflection of the measuring light by the support structure (10).

3. Measuring device according to claim 1 or 2, wherein
the light emitting unit (21) is configured to emit measuring light of the first polarisation state and/or measuring light of the second polarisation state, wherein the measuring light of the first polarisation state and the measuring light of the second polarisation state are providable simultaneously or successively, in particular wherein
• the light emitting unit (21) comprises at least two light sources (22,26) one of which is configured to emit measuring light of the first polarisation state and the other one is configured to emit measuring light of the second polarisation state, and/or
• the polarisation selecting unit is configured to control the light emitting unit such that either measuring light of the first polarisation state or measuring light of the second polarisation state is emitted.

4. Measuring device according to any one of the preceding claims, wherein
the light emitting unit (21), the support structure (10) and the light receiving unit (30) define a beam path for the measuring light, wherein the polarisation selecting unit is arranged along the beam path
• between the light emitting unit (21) and the support structure (10) or
• between the support structure (10) and the light receiving unit (30),
in particular wherein the measuring device comprises a first polariser (23) arranged along the beam path between the light emitting unit (21) and the support structure (10) and/or a second polariser (25) arranged along the beam path between the support structure (10) and the light receiving unit (30).

5. Measuring device according to any of the claims 1 to 4, wherein
• the polarisation selecting unit is provided as a polarising beam splitter providing separation of reflected measuring light with a first polarisation state and of reflected measuring light with a second polarisation state and
• the light receiving unit (30) comprises two sensor units one of which configured and arranged to detect measuring light of the first polarisation state and one of which configured and arranged to detect measuring light of the second polarisation state.

6. Measuring device according to any of the claims 1 to 4, wherein
the polarisation selecting unit is configured to provide selecting either reflected measuring light with a first polarisation state or with a second polarisation state by
• selectively providing emitting of the measuring light with a first polarisation state or with a second polarisation state by changing an emitting selection state of the polarisation selecting unit and/or
• selectively providing transmitting of reflected measuring light only of the first polarisation state or of the second polarisation state by changing a transmission selection state of the polarisation selecting unit.

7. Measuring device according to claim 6, wherein
the polarisation selecting unit
• is provided as a controller to control the light emitting unit (21), or
• is provided by the light emitting unit (21), or
• comprises a moveable polarising filter element (23,25) for filtering emitted measuring light or reflected measuring light, in particular arranged rotatable about the optical axis or linearly moveable, or
• is provided as a switchable optical element (28), in particular as a liquid crystal device, or
• is provided as a polariser which is combined with a sensor unit of the light receiving unit (30) and provides pixel-selective detection of reflected measuring light of the first and the second polarisation state.

8. Measuring device according to any one of the preceding claims, wherein
the measuring light of the first polarisation state comprises linear polarisation of a first orientation and the measuring light of the second polarisation state comprises linear polarisation of a second orientation orthogonal to the first orientation, in particular wherein the light emitting unit (21) comprises polarised filtering of the first orientation and the light receiving unit (30) comprises polarised filtering of the second orientation orthogonal to the first orientation.

9. Measuring device according to any one of the preceding claims, wherein
• the polarisation state manipulation layer (12) provides circular polarisation of measuring light by passing the polarisation state manipulation layer (12), in particular wherein the polarisation state manipulation layer (12) comprises a λ/4 waveplate or λ/4 foil, and/or
• the retro-reflective layer (11) comprises a retro-reflective foil, in particular a micro-sphere retroreflector foil.

10. Measuring device according to any one of the preceding claims, wherein
the measuring device comprises a controlling and processing unit (9) configured to control at least the polarisation selecting unit and the light receiving unit, the controlling and processing unit (9) comprises an image capturing functionality configured to
• emit the measuring light by controlling the light emitting unit (21),
• detect reflected measuring light by controlling the polarisation selecting unit to select measuring light with the first polarisation state and correspondingly capture a first image by means of the light receiving unit (30), and
• detect reflected measuring light by controlling the polarisation selecting unit to select measuring light with the second polarisation state and correspondingly capture a second image by means of the light receiving unit (30).

11. Measuring device according to claim 10, wherein
• the first image and the second image each cover at least a part of the object (7) and of the support structure (10), wherein each image covers a common region of the object (7), and/or
• the detected reflected measuring light is partly reflected at the object (7) and partly reflected by the support structure (10), wherein the measuring light reflected at the object (7) comprises a polarisation state different from a polarisation state of measuring light reflected by the support structure (10).

12. Measuring device according to any of the claims 10 or 11, wherein
the controlling and processing unit (9) comprises an image processing functionality configured to subtract image information of the first image from image information of the second image, in particular wherein the image information comprises
• pixel-related values concerning colour and/or brightness of the pixels and/or
• image region-related information, in particular contrast.

13. Measuring device according to any one of the preceding claims, wherein
the measuring device is embodied as a coordinate measuring machine, in particular as a vision machine.

14. Method for imaging an object (7) by means of a measuring device according to any one of the preceding claims, wherein the method comprises
• providing the object (7) on the support structure (10),
• illuminating the object (7) by directing measuring light to the object by means of the light emitting unit (21),
• receiving and detecting measuring light reflected at the support structure (10) and reflected by the object (7) by means of the light receiving unit (30), and
• capturing a first image and a second image of the object by means of the light
receiving unit (30),
**characterized in that**
receiving and detecting the measuring light is provided by
• selecting measuring light with a first polarisation state,
• capturing the first image by capturing reflected measuring during selecting measuring light with the first polarisation state,
• selecting measuring light with a second polarisation state and
• capturing the second image by capturing reflected measuring during selecting measuring light with the second polarisation state.

15. Computer program product, which, when executed by a controlling and processing unit and/or a controller, causes the automatic execution and controlling of the steps of the method according to claim 14.
